(19) Europäisches Patentamt / European Patent Office / Office européen des brevets

(11) **EP 3 603 781 A1**

(12) **EUROPEAN PATENT APPLICATION**
published in accordance with Art. 153(4) EPC

(43) Date of publication:
**05.02.2020 Bulletin 2020/06**

(51) Int Cl.:
**B01D 71/34** (2006.01)  **B01D 69/00** (2006.01)
**B01D 69/10** (2006.01)  **B01D 69/12** (2006.01)
**C08J 9/28** (2006.01)  **B01D 65/10** (2006.01)

(21) Application number: 18774338.0

(22) Date of filing: **28.03.2018**

(86) International application number:
**PCT/JP2018/012974**

(87) International publication number:
**WO 2018/181579 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017  JP 2017071809**

(71) Applicants:
• **JNC Corporation**
  **Chiyoda-ku**
  **Tokyo 100-8105 (JP)**
• **JNC Petrochemical Corporation**
  **Tokyo 100-0004 (JP)**

(72) Inventors:
• **MATSUMOTO Ryuji**
  **Ichihara-shi**
  **Chiba 290-8551 (JP)**
• **NAGASAKO Tadashi**
  **Ichihara-shi**
  **Chiba 290-8551 (JP)**
• **IWASAKI Takayuki**
  **Ichihara-shi**
  **Chiba 290-8551 (JP)**

(74) Representative: **Becker Kurig Straus**
**Patentanwälte**
**Bavariastrasse 7**
**80336 München (DE)**

(54) **MICROPOROUS FILM**

(57)   [Problem] To improve the qualities of a microporous film formed of a polyvinylidene fluoride-based resin. [Solution] A polyvinylidene fluoride-based microporous film comprising a base film and a microporous film, said microporous film being an asymmetric film and comprising a skin layer, in which micropores are formed, and a support layer for supporting the skin layer, in which pores larger than the micropores are formed, wherein: the microporous film is formed of a polyvinylidene fluoride-based resin material; the skin layer has multiple spheres; multiple linear binders extend in the three-dimensional directions from each of the spheres; and the adjacent spheres are bound to each other via the linear binders so as to form a three-dimensional network structure having the spheres as cross points. The polyvinylidene fluoride-based microporous film has a number of defects (the number of colored coarse voids) of less than 20.

## Description

### Technical Field

The invention relates to a microporous membrane formed of a polyvinylidene fluoride-based resin.

### Background Art

In general, a microporous membrane has been widely used as a filtration membrane. The filtration membrane is required to increase an amount of permeation while keeping particle rejection according to a filtration object. However, if porosity is increased with an intention of increasing the amount of permeation, a distribution of voids becomes nonuniform to cause extremely large pores or cracks on a surface, resulting in reduction of the particle rejection. On the other hand, if the porosity is reduced with an intention of increasing the particle rejection, the amount of permeation is reduced. Thus, improvement in the particle rejection and improvement in the amount of permeation are in a conflicting relationship, whereby a further increase in the amount of permeation while keeping the particle rejection has been significantly difficult.

Moreover, a pore diameter distribution also influences the relationship between the particle rejection and the amount of permeation. Even with the same average pore diameter, a filtration membrane having a wide pore diameter distribution has a larger maximum pore diameter than the filtration membrane having a narrow pore diameter distribution. Therefore, the particle rejection is reduced. Moreover, the filtration membrane having the wide pore diameter distribution simultaneously has a great number of small pores also, and therefore the amount of permeation is not necessarily large. Therefore, in order to further increase the amount of permeation while keeping the particle rejection, the pore diameter distribution is desirably narrowed. However, in order to narrow the pore diameter distribution, a size or a shape is generally necessary to be uniformized as much as possible, and preparation of such a membrane has been significantly difficult.

In order to resolve such a difficulty, the present applicants have proposed a microporous membrane of an asymmetric structure made of polyvinylidene fluoride-based resin, having more uniform pore shape and size and higher permeability while maintaining the particle rejection rate, and a manufacturing method thereof in Patent literature No. 1.

The microporous membrane formed of the polyvinylidene fluoride-based resin described in Patent literature No. 1 is an asymmetric microporous membrane that is provided with a skin layer in which micropores are formed, and a support layer which supports the skin layer and in which pores larger than the micropores are formed. The skin layer has a plurality of spherical bodies, and a plurality of linear binding materials extend three-dimensionally from the respective spherical bodies, and the adjacent spherical bodies are connected with each other by the linear binding materials to form a three-dimensional network structure where the spherical bodies serve as intersections. Patent literature No. 1 describes that, as Examples, such a microporous membrane is manufactured by a method of performing a step of preparing a raw material solution, a porosity forming step, and a washing and drying step in the order.

However, even with the microporous membrane obtained by the method described in Patent literature No. 1, occurrence of faults is unavoidable in the micropores structure as described above at a nonnegligible frequency. Typified examples of such faults include coarse voids called "defects." If the frequency of the defects is high, a case where the microporous membrane is used for various filter products has a problem of allowing a large particle size substance to be essentially caught by the filtration membrane to pass through the microporous membrane.

Patent literature Nos. 2 and 3 describe attempts to suppress occurrence of coarse pores in manufacture of microporous membranes used for various filters. However, the manufacturing methods described in Patent literature Nos. 2 and 3 are to be applied to a polyethylene-based microporous membrane, and the arts have been unable to apply to a manufacturing method of a polyvinylidene fluoride-based microporous membrane on which the present applicants focus.

### Citation List

### Patent Literature

Patent literature No. 1: WO 2014/054658 A.
Patent literature No. 2: WO 2002/072248 A.
Patent literature No. 3: JP 2004-16930 A.

## Summary of Invention

### Technical Problem

An object of the invention is to provide a polyvinylidene fluoride-based microporous membrane that exhibits performance higher than a conventional product as a material for various filter products, in which the number of defects is reduced. The present inventors have adopted an improved method of manufacturing the polyvinylidene fluoride-based microporous membrane in order to achieve the object.

### Solution to Problem

As a result, the present inventors have succeeded in obtaining a polyvinylidene fluoride-based microporous membrane in which faults are significantly reduced in comparison with a conventional product by a surprisingly simple means of allowing a predetermined amount of water to exist in a raw material solution in a method of manufacturing the polyvinylidene fluoride-based microporous membrane for performing a step of preparing the raw material solution, a porosity forming step and a washing and drying step in the order. More specifically, the invention is as described below.

Item 1. A polyvinylidene fluoride-based microporous membrane, comprising:

a substrate film; and the following microporous membrane: wherein the microporous membrane is an asymmetric membrane, and has a skin layer in which micropores are formed, and a support layer which supports the skin layer and in which pores larger than the micropores are formed,
a material of the microporous membrane is a polyvinylidene fluoride-based resin,
the skin layer has a plurality of spherical bodies, and a plurality of linear binding materials extend three-dimensionally from the respective spherical bodies, and the adjacent spherical bodies are connected with each other by the linear binding materials to form a three-dimensional network structure where the spherical bodies serve as intersections, and
the number of defects (the number of colored coarse voids) measured by the following method is less than 20:
(defect measuring method)
four circular sheets having a diameter of 142 mm are cut out from the polyvinylidene fluoride-based microporous membrane; the resulting sheets are dipped into isopropyl alcohol, and then one sheet thereof is set in a stainless steel holder with a tank, having an effective filtration area of 113 cm$^2$; smoke of an incense stick is passed through the set sheet under a filtration pressure of 100 kPa; then, the resulting sheet is removed from the holder; colored dots on a surface of the removed sheet on a side of the polyvinylidene fluoride-based resin are visually detected to measure the number thereof; the measurement is also performed on other three sheets under same conditions; and a total of the number of defects detected in the four sheets is taken as the number of defects.

Item 2. The polyvinylidene fluoride-based microporous membrane according to item 1, wherein the number of defects is 5 or less.
Item 3. The polyvinylidene fluoride-based microporous membrane according to item 1, obtained by solidifying, in water, a raw material solution having the following viscoelasticity: wherein a graph with a shear rate (1/s) (x) as a horizontal axis and a reciprocal of viscosity (1/mPa·s) (y) as a vertical axis shows a curve having an arc with a convex upward for the raw material solution, in which a region of $x \leq 40$ can be approximated by a quadratic function, and a quadratic coefficient of the quadratic function is less than $10^{-8}$.

### Advantageous Effects of Invention

Almost no defects exist in a polyvinylidene fluoride-based microporous membrane of the invention. The polyvinylidene fluoride-based microporous membrane of the invention has sufficient permeability. Accordingly, the polyvinylidene fluoride-based microporous membrane of the invention is preferable as a material for a separation and filtration member requiring high performance, for example, an air vent filter.

### Brief Description of Drawings

Fig. 1 schematically shows a cross-section of a polyvinylidene fluoride-based microporous membrane of the invention.

Fig. 2 shows a cross-section of a polyvinylidene fluoride-based microporous membrane manufactured in Example 1.

Fig. 3 shows a scanning electron micrograph of a skin layer in the polyvinylidene fluoride-based microporous membrane manufactured in Example 1.

Fig. 4 shows a scanning electron micrograph of the skin layer of the polyvinylidene fluoride-based microporous membrane manufactured in Example 1.

Fig. 5 shows a relationship between a shear rate (1/s) (x) and a reciprocal of viscosity thereof (1/mPa·s) (y) in a raw material solution used in Examples and Comparative Examples.

Fig. 6 schematically shows steps 2,3 and 4 for manufacturing a polyvinylidene fluoride-based microporous membrane according to the invention.

Fig. 7 shows occurrence of defects of the polyvinylidene fluoride-based microporous membrane manufactured in Example 1.

Fig. 8 shows occurrence of defects of the polyvinylidene fluoride-based microporous membrane manufactured in Comparative Example 1.

## Description of Embodiments

### Manufacturing method for microporous membrane

Main steps constituting a method of manufacturing a polyvinylidene fluoride-based microporous membrane of the invention will be described below. A conventional processing step used in film manufacture and processing thereof can be added to the steps described below in an extent in which advantageous effects of the invention are not adversary affected.

(Step 1)

Step 1 is a step of preparing a raw material solution containing a polyvinylidene fluoride-based resin, a solvent, a porosity forming agent and water. The polyvinylidene fluoride-based resin used herein is a material of a microporous membrane. As the polyvinylidene fluoride-based resin used in step 1, all of one or more kinds of vinylidene fluoride homopolymers, one or more kinds of vinylidene fluoride copolymers and a mixture thereof can be used. As the vinylidene fluoride copolymer, a copolymer of a vinylidene fluoride monomer and a monomer other than the fluorine-based monomer, for example, a copolymer obtained by one or more kinds of fluorine-based monomers selected from vinyl fluoride, ethylene tetrafluoride, propylene hexafluoride, ethylenechloride trifluoride with vinylidene fluoride is generally used. A preferred resin as the polyvinylidene fluoride-based resin used in step 1 is a vinylidene fluoride homopolymer, in which the vinylidene fluoride homopolymer preferably occupies 50% by weight in a total of the polyvinylidene fluoride-based resin. Moreover, a plurality of kinds of vinylidene fluoride homopolymers different in viscosity, molecular weight or the like can also be used.

In order that the raw material solution is not absorbed into a substrate film, and a uniform coating film is formed in step 2 described later, generally, as the polyvinylidene fluoride-based resin, a resin having a weight average molecular weight (Mw) from 600,000 to 1,200,000 is preferable.

The solvent used in step 1 means an organic solvent that can dissolve the polyvinylidene fluoride-based resin at a degree at which step 2 described later can be performed in a state in which the polyvinylidene fluoride-based resin is dissolved in the solvent, and that is miscible with water. As such a solvent, N-methyl-2-pyrrolidone (NMP), dimethyl sulfoxide, N,N-methylacetamide (DMAc), N,N-dimethylformamide (DMF), methyl ethyl ketone, acetone, tetrahydrofuran, tetramethyl urea, lower alkylketone such as trimethyl phosphate, ester, amide or the like, which is a polar solvent, can be used. The solvents may be mixed and used, or other organic solvents may be contained therein in the range in which the advantageous effects of the invention are not adversary affected. Among such solvents, N-methyl-2-pyrrolidone, N,N-dimethylacetamide or N,N-dimethylformamide is preferable.

The porosity forming agent used in step 1 is an organic medium that is soluble in the solvent and also in water. In steps 3, 4 and 5 described later, the porosity forming agent and the solvent migrate from the raw material solution to water. On the other hand, the polyvinylidene fluoride-based resin is insoluble in water, and therefore remains on the substrate film in a solid state through steps 3, 4 and 5 to finally form a porous layer on the substrate film.

As the porosity forming agent used in step 1, a water-soluble polymer such as polyethylene glycol, polypropylene glycol, polyvinyl alcohol, polyvinyl acetate, polyvinylpyrrolidone and polyacrylic acid is used. A preferred porosity forming agent is polyethylene glycol or polyvinylpyrrolidone, a further preferred porosity forming agent is polyethylene glycol, and a most preferred porosity forming agent is polyethylene glycol having a weight average molecular weight of 200 to 1,000 in view of a pore shape of the resulting vinylidene fluoride microporous membrane.

An amount ratio among the polyvinylidene fluoride-based resin, the solvent and the porosity forming agent as described above is generally adjusted such that the polyvinylidene fluoride-based resin occupies 5 parts by weight to 20 parts by weight, the solvent occupies 70 parts by weight to 90 parts by weight, and the porosity forming agent occupies 0.5 part by weight to 40 parts by weight, based on 100 parts by weight of a total amount thereof.

In the invention, as a raw material of the raw material solution, further use of water in step 1 is applied as essential conditions, in addition to the polyvinylidene fluoride-based resin, the solvent and the porosity forming agent. Water used in step 1 is preferably water with high purity, and in general, water that can be obtained as pure or ultrapure water is desirable. An amount of water to be added to the raw material solution is generally adjusted in the range of 6.5% by weight or less, preferably in the range of 2% by weight to 6.5% by weight, and further preferably in the range of 3% by weight to 5% by weight, based on the total amount of the raw material solution.

A method of mixing the polyvinylidene fluoride-based resin, the solvent, the porosity forming agent and water in step 1 is not particularly limited. For example, temperature at which the materials are mixed only needs to be a temperature at which the materials are completely mixed in a liquid state, which is generally a temperature from room temperature or more to 100°C or less. The thus obtained raw material solution is used in the following step 2.

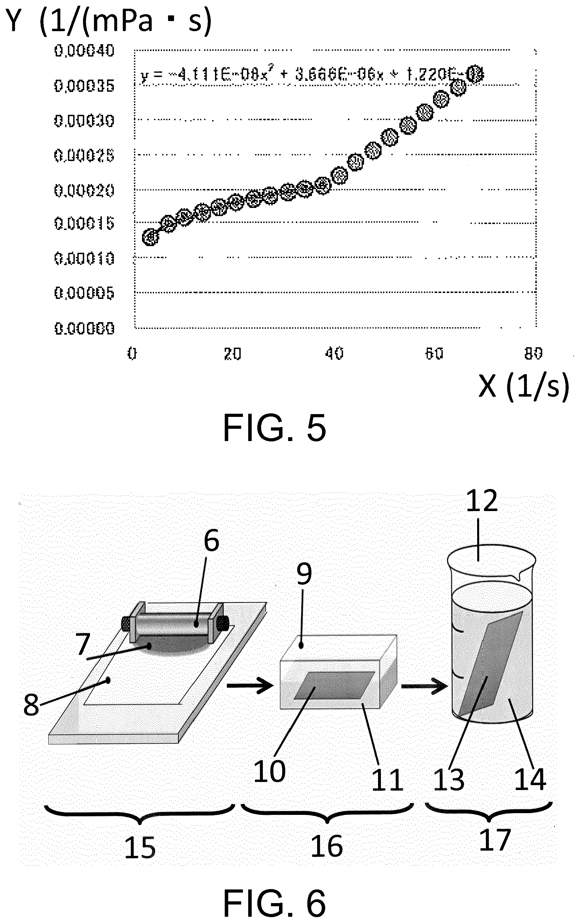

In addition, for adhesion to the substrate film in the next step 2 or for progress of solidification in step 3 described later, the raw material solution to be adjusted in step 1 desirably exhibits moderate viscoelasticity. Such viscoelasticity satisfies conditions in which a graph with a shear rate (1/s) (x) as a horizontal axis and a reciprocal of viscosity (1/mPa·s) (y) as a vertical axis shows a curve having an arc with a convex upward, and a region of $x \leq 40$ can be approximated by a quadratic function, and a quadratic coefficient of the quadratic function is less than $10^{-8}$ for the raw material solution. As an example of the graph described above, Fig. 5 shows a graph obtained for the raw material solution used in Example 1 described later. The raw material solution exhibiting such specific viscoelasticity is used, whereby a three-dimensional network structure described later can be easily formed from the polyvinylidene fluoride-based resin according to the manufacturing method of the invention.

(Step 2)

Step 2 to step 4 will be described with reference to Fig. 6. Step 2 is a step of applying the raw material solution obtained in step 1 to the substrate film. The substrate film is required to have a function of promoting formation of pores inside the raw material solution in step 3 described later, and further reinforcing the obtained polyvinylidene fluoride-based microporous membrane. Accordingly, as the substrate film, any material can be used without limitation, as long as the raw material is chemically stable and has mechanical strength, and is excellent in affinity with and adhesion to the raw material solution, particularly polyvinylidene fluoride-based resin. As such a substrate film, for example, a nonwoven fabric obtained by paper-making, a spun bond method, a melt-blown method or the like, a woven fabric, a porous plate or the like can be used. As the material, polyester, polyolefin, ceramic, cellulose or the like is used. Among the substrate films, a spunbond nonwoven fabric made of polypropylene is preferable in view of an excellent balance regarding flexibility, lightness, strength, heat resistance and the like. In addition, when the nonwoven fabric is used, a basis weight thereof is preferably in the range of 15 to 150 g/m², and further preferably in the range of 30 to 70 g/m². If the basis weight is more than 15 g/m², an effect of providing a substrate layer is sufficiently obtained. Moreover, if the basis weight is less than 150 g/m², post-processing such as bending and thermal bonding is facilitated.

A method of applying the raw material solution to the substrate film is not limited, as long as the method has a capability of uniformly applying the raw material solution in an amount in which the polyvinylidene fluoride-based microporous membrane having a thickness of 10 micrometers to 500 micrometers can be finally formed. For example, various coating devices such as a roll coater, a die coater and a lip coater, and various film applicators are selected and used according to an area and length of the substrate film. Step 2 is generally performed at room temperature.

When the substrate film is in a small piece, the substrate film is placed on a smooth coating table, and fixed with an appropriate tool to uniformly apply the raw material solution to the film. In the above case, the raw material solution is applied thereto for each substrate film, and the substrate film to which the raw material solution is applied is immediately transferred to a vessel in which step 3 described later is performed.

When the substrate film is long, and typically tales a form wound into a roll shape, the substrate film wound thereon is drawn from an end and developed, and the developed substrate film is carried in a site (application portion) in which step 3 is performed under predetermined tension or predetermined speed by a conveying mechanism such as a roll. In the application portion, the raw material solution is uniformly applied onto a surface of the substrate film that is maintained flat and continuously passes through the application portion by various application devices. The substrate film to which the raw material solution is applied, which is carried out from the application portion, is immediately conveyed to the site in which step 3 described later is performed.

(Step 3)

Step 3 is a step of dipping the film obtained in step 2 into water to solidify the raw material solution. The solidification reaction starts by bringing the raw material solution on the film obtained in step 2 into contact with water, and is completed by migration of a water-soluble component in the raw material solution, namely, a fraction mainly formed of the solvent and the porosity forming agent, into water, whereby the water-insoluble polyvinylidene fluoride-based resin remains on the substrate film to be fixed thereon. Water existing in the raw material solution in an amount generally in the range of 6.5% by weight or less, preferably in the range of 2% by weight to 6.5% by weight, and further preferably in the range of 3% by weight to 5% by weight, based on the total amount of the raw material solution, is inevitably eluted to an outside of the film. In association with migration of the solvent and the porosity forming agent into water, the polyvinylidene fluoride-based resin is solidified while forming the voids thereinside. The above step 3 can also be referred to as a porosity forming step or a phase transition step in formation of the polyvinylidene fluoride-based microporous membrane. Water to be used in step 2 is preferably water with high purity, and generally desirably water that can be obtained as pure or ultrapure water.

In such step 3, in order to bring the film obtained in step 2 into contact with water, a vessel containing water is reasonably required. According to the invention, such a vessel containing water is referred to as a solidification vessel. As solidification progresses in the solidification vessel, the water-soluble component, namely, the fraction mainly formed of the solvent and the porosity forming agent, migrates from the raw material solution into water in the solidification vessel. Such an increase in a concentration of a water-soluble migration component or a rapid variation may be a hindrance in allowing the solidifying reaction to stably progress in step 3 to repeat step 3 with sufficient reproducibility. Accordingly, provision of an appropriate means for maintaining purity of water in the solidification vessel is desirable according to a scale of the solidification vessel or an amount of water in the solidification vessel.

When the polyvinylidene fluoride-based microporous membrane having the thickness of 10 micrometers to 500 micrometers is formed on the substrate film, a time (solidification time) for dipping the substrate film to which the raw material solution is applied into water is 30 seconds or more, preferably 1 minute or more and 10 minutes or less, and further preferably 2 minutes or more and 5 minutes or less. In order to form as uniform pores as possible inside the polyvinylidene fluoride-based resin, physical stimulation onto the surface of the film obtained in step 2 is desirably suppressed as much as possible during dipping into water. Accordingly, in step 3, stirring or bubbling of water in the solidification vessel is not preferred. A temperature of water when step 3 is performed only needs to be a temperature at which the solidification progresses, and is generally room temperature.

When the film obtained in step 2 is in the small piece, step 3 can be performed batchwise. Specifically, the film obtained in step 2 is allowed to stand in a state in which the whole of the film is in contact with water in the solidifying vessel during the solidifying time. The solidification vessel to be used in the above case may be appropriately selected according to the shape of the film, and if the vessel in a laboratory level is applied, a vat made of stainless steel or a flat bowl made of glass is used. If water is replaced for each batch of solidification operation so as to avoid a significant variation of purity of water in the solidification vessel to be caused by the component migrated from the raw material solution, the raw material solution can be solidified with sufficient reproducibility.

When the raw material solution is applied to a long substrate film in step 2, the film obtained in step 2 is first continuously carried into the solidification vessel by using a conveying means such as the roll in step 3, and then the film is passed in water inside the solidification vessel such that the film is brought into contact with water during the solidification time, and then the film is discharged from the solidification vessel. Thus, solidification of the raw material solution applied to the long film obtained in step 2 starts, progresses, and is completed. An appropriate drainage and water supply mechanism can be attached to the solidification water vessel so as to avoid the significant variation of purity of water in the solidification vessel. As such a mechanism, a means obtained by appropriately combining a sensor, a drainage pump, a water supply pump and the like, which are ordinarily used in a chemical plant, can be used.

The film in which solidification of the raw material solution on the surface is completed in step 3 is immediately transferred to a site in which step 4 described later is performed.

(Step 4)

Step 4 is a step of washing the film through step 3 in water. Water used herein is preferably water with high purity in the same manner as in step 3, and in general, water available as pure water or ultrapure water is preferable.

In such step 4, a water-filled vessel for introducing the film through step 3 is inevitably required. According to the invention, such a vessel is referred to as a washing vessel. In order to enhance a washing effect, the film can also be washed a plurality of times by using a plurality of washing vessels or replacing water in the washing vessel according to the invention. Moreover, the film can also be washed while applying a moderate stimulus by attaching an apparatus for generating a water flow or air bubbles in the washing vessel according to the invention. A water flow generation means in the above case can be designed by appropriately combining a publicly-known drainage or water supply mechanism and a stirring mechanism. Moreover, the apparatus for generating air bubbles in the above case is appropriately selected from a means generally called a diffuser tube or the like according to a scale of the washing vessel. Intensity of the water flow and the air bubbles is adjusted to a level at which the pores of the polyvinylidene fluoride-based resin on the surface of the film to be washed are not deformed. Flow path of the water flow and density of the air bubbles are adjusted such that the water flow and the air bubbles are uniformly and continuously brought into contact with the film in the washing vessel. Even in step 4, in order to enhance washing efficiency, an appropriate means for maintaining purity of water in the washing vessel can be provided.

In step 4, a temperature of water in the washing vessel only needs to be a temperature at which the film can be washed without damaging the film, and is generally room temperature.

When the film in the small piece is processed in step 4, step 4 can be performed batchwise. Specifically, the film obtained in step 3 is allowed to stand in a state in which the whole of the film is in contact with water and air bubbles in the washing vessel during the washing time. The washing vessel to be used in the above case may be appropriately selected according to the shape of the film, and if the vessel in a laboratory level is applied, a vat made of stainless steel or a flat bowl made of glass can be used. If water is replaced for each batch of washing so as to avoid the significant variation of purity of water in the washing vessel to be caused by the component migrated from the surface of the film, the film can be washed with sufficient reproducibility every time in step 4.

When the long film is processed in step 4, the film discharged from the solidification vessel in step 3 is first continuously carried into the washing vessel by using the conveying means such as the roll, and then the film is passed in water in the washing vessel such that the film is brought into contact with water during the washing time, and then the film is discharged from the washing vessel. Thus, water-soluble component remaining in the long film in a process of step 3 is removed with satisfactory efficiency. An appropriate water supply and drainage mechanism can be attached to the washing vessel so as to avoid the significant variation of purity of water in the washing vessel. As such a mechanism, the means obtained by appropriately combining the sensor, the drainage pump, the water supply pump and the like, which are ordinarily used in the chemical plant, can be used.

The film in which step 4 is completed is dried, wound up, cut and packed according to a conventional method and when necessary. Thus, the polyvinylidene fluoride-based microporous membrane that can be used as a filtration membrane or separation membrane is completed. Hereinafter, in the present description, the polyvinylidene fluoride-based microporous membrane of the invention is referred to merely as "the microporous membrane of the invention" in several cases.

**Microporous membrane**

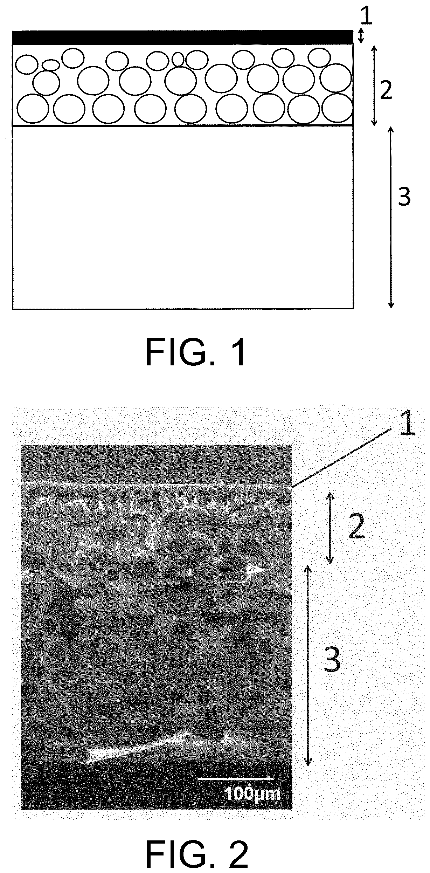

For description of a structure of the microporous membrane according to the invention to be obtained by the method, Fig. 1 schematically showing the structure, and Fig. 2, Fig. 3 and Fig. 4 each showing one example of the microporous membrane according to the invention are referenced. As shown in the above figures, the microporous membrane of the invention is an asymmetric membrane, and has skin layer 1 in which micropores are formed, and support layer 2 which supports the skin layer and in which pores larger than the micropores are formed. A material of the microporous membrane is a polyvinylidene fluoride-based resin, the skin layer 1 has a plurality of spherical bodies 4, and a plurality of linear binding materials 5 extend from the respective spherical bodies 4 in a three-dimensional direction, and adjacent spherical bodies 4 are connected with each other by the linear binding materials 5 to form a three-dimensional network structure where spherical bodies 4 serve as intersections.

In the invention, the term "skin layer" means a layer having a thickness from the surface to a place in which the micropores are developed in a cross section of the microporous membrane, and the term "support layer" means a layer having a value of the thickness obtained by subtracting the thickness of the skin layer from an entire thickness of the microporous membrane. The term "macrovoid" means a huge cavity developed in the support layer of the microporous membrane into a diameter of about several micrometers at minimum, and a size almost the same as the thickness of the support layer at maximum. The term "spherical body" means a body having a spherical shape formed in the intersection of the three-dimensional network structure according to the invention, including a substantial spherical shape, which is not limited to a perfect spherical shape.

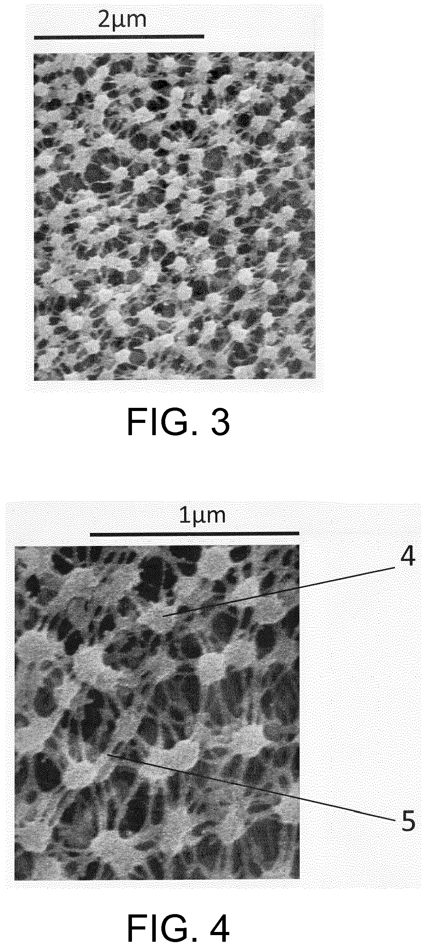

If the microporous membrane is thus configured, the void between the spherical body and the spherical body is formed into a shape divided by the linear binding material, and therefore the micropores having a further uniform shape and size of the void can be easily formed in comparison with a conventional microporous membrane having no spherical body, and the skin layer excellent in permeability can be formed. The linear binding material also plays a role of crosslinking the spherical bodies, and therefore the spherical bodies do not drop or the like, whereby the filter media per se can be prevented from being mixed with a filtrate. Further, the spherical bodies exist in the intersections of the three-dimensional network structure, and therefore flattening of the three-dimensional network structure caused by pressure upon using the membrane as the filtration membrane can be prevented. More specifically, pressure resistance is high. Further, owing to the three-dimensional network structure formed by the spherical bodies and the linear binding materials as shown in Fig. 3 and Fig. 4, the number of voids in the skin layer is increased in comparison with the conventional microporous membrane having the same degree of pore diameter, and therefore pathways can be maintained, and also the voids are further homogeneously and sterically arranged, and therefore the microporous membrane has excellent permeability.

Moreover, the polyvinylidene fluoride-based resin is used as the material of the microporous membrane, and therefore the microporous membrane is mechanically, thermally and chemically stable. Further, the polyvinylidene fluoride-based resin also has an advantage according to which the polyvinylidene fluoride-based resin is further easily processed and also secondary processing (for example, cutting and bonding with other materials) after being processed is further facilitated in comparison with other fluorocarbon resins.

In the microporous membrane of the invention, a particle diameter distribution of the spherical bodies is preferably in a state in which 45% or more of the whole is contained within ±10% of an average particle diameter. In such a state, an opening diameter of the void formed between the spherical body and the spherical body tends to be uniform.

In the microporous membrane of the invention, a distribution on lengths of the binding materials is preferably in a state in which 35% or more of the whole is contained within ±30% of an average length. In such a state, the spherical bodies of the skin layer are further uniformly dispersed, and the void having a uniform pore diameter is easily formed between the spherical body and the spherical body.

In such a microporous membrane of the invention, the spherical bodies preferably have an average particle diameter of 0.05 to 0.5 micrometer. In the above case, the micropore is easily formed between the spherical body and the spherical body by the linear binding material interconnecting the spherical bodies.

In the microporous membrane of the invention, the skin layer is a layer (functional layer) for eliminating impurities in the asymmetric membrane. Therefore, if the layer is within the range in which formation of the three-dimensional network structure where the spherical bodies serve as the intersections is not adversary affected, as the thickness is smaller, filtration resistance is reduced, and therefore such a case is preferable. On the other hand, the support layer occupying most of the microporous membrane of the invention hardly contributes to elimination of impurities. However, the microporous membrane is easily damaged during use only with a significantly thin skin layer, and therefore the support layer sufficiently thicker than the skin layer is required. Thus, a thickness of the skin layer of the microporous membrane of the invention is preferably 0.5 to 10 micrometers, and a thickness of the support layer of the microporous membrane of the invention is preferably 20 to 500 micrometers.

In the microporous membrane of the invention, the substrate film can function as a site for reinforcing a part of the polyvinylidene fluoride-based resin. For example, when the microporous membrane of the invention is used as the filtration membrane, presence of the substrate film allows the filtration membrane to withstand higher filtration pressure. Moreover, the substrate film can prevent excessive outflow of the raw material solution to an outside of the film in the process of manufacturing the microporous membrane of the invention. Such a function of the substrate film is fulfilled particularly when viscosity of the raw material solution is low.

In the microporous membrane of the invention, part of the support layer is formed into a mixture with the substrate film in a site in which the polyvinylidene fluoride-based resin is in contact with the substrate film, and therefore a boundary between both parts is not clear. Such a composite portion between the support layer and the substrate film exists with a moderate thickness, whereby adhesion of the support layer to the substrate film is secured.

In the microporous membrane of the invention, the skin layer has the homogeneous three-dimensional network structure by the spherical bodies and the linear binding materials, and therefore a size of the pore and the pore diameter in the skin layer are uniformized, and high permeability (for example, high air permeability or high water permeability) can be exhibited. More specifically, the size and the shape of the pore are further uniform, and therefore a membrane having a narrower pore diameter distribution is formed, whereby unprecedented permeability can be obtained while keeping the particle rejection. Further, the polyvinylidene fluoride-based resin is used as a membrane material, and therefore the microporous membrane has excellent chemical resistance and high heat resistance (heat resistance temperature of approximately 120°C).

Furthermore, the microporous membrane of the invention has a significantly advantageous feature of formation of almost no coarse voids (defects). The number of defects existing in the microporous membrane of the invention can be measured and evaluated, for example, by the defect measuring method as described below.

(Defect measuring method) Four circular sheets having a diameter of 142 millimeters are cut out from the microporous membrane obtained. The resulting sheets are dipped into isopropyl alcohol, and then one sheet thereof is set in a stainless steel holder with a tank, having an effective filtration area of 113 cm$^2$. Smoke of an incense stick is passed through the set sheet under a filtration pressure of 100 kPa. Then, the resulting sheet is removed from the holder. Colored dots are visually detected on a surface of the removed sheet on a side of the polyvinylidene fluoride-based resin to measure the number thereof. The measurement is also performed on other three sheets under the same conditions. A total of the number of defects detected on four sheets is taken as the number of defects.

An object of the invention is to provide the polyvinylidene fluoride-based microporous membrane having almost no number of defects determined by the method, typically the number of defects suppressed to approximately 20 or less. The microporous membrane of the invention, having almost no defects, is useful as an excellent separation membrane or filter material, capable of accurately separating and removing an objective substance.

In addition, the incense stick used in the defect measurement method may be a general material, and for example, "Mainichi-koh" (registered trademark) made by Nippon Kodo Co. Ltd. can be used.

**Examples**

**Examples and Comparative Examples**

A small piece-shaped microporous membrane made of a polyvinylidene fluoride-based resin was manufactured and evaluated by the following method.

(Step 1)

A raw material solution was adjusted by using the following raw materials. Table 1 shows the raw materials used in each Example and amounts thereof. In all Examples, selected raw materials were uniformly mixed, and the resulting material was degassed at room temperature to obtain a raw material solution.

- Polyvinylidene fluoride (PVDF)-based resin: product "Kyner HSV900", made by Arkema K.K., ("HSV900" in Table 1)
- Solvent: Dimethylacetamide (DMAc) ("DMAc" in Table 1)
- Porosity forming agent: Polyethylene glycol (PEG) having a weight average molecular weight of 400 and 600, respectively, ("PEG 400" and "PEG 600" in Table 1, respectively)
- Ultrapure water ($H_2O$) : 1 part by weight of "Direct Q UV" (specific resistivity: 18 M$\Omega$·cm or more), made by Merck Performance Materials Ltd., ("DQ" in Table 1)

(Step 2)

As a substrate film, a spunbond nonwoven fabric ("Eltas P03050" made by Asahi Kasei Corporation) cut into a square of 20 cm × 20 cm was used. The resulting substrate film was placed on a flat glass plate, and the raw material solution was applied to a surface of the substrate film using a Baker applicator to be 250 $\mu$m in a thickness.

(Step 3)

As a solidification vessel, a stainless steel vat containing 2 L of ultrapure water was used. In the film solidification vessel, the film obtained in step 2 was put so as to avoid rippling a water surface, and the film was left to stand in the film solidification vessel for 2 minutes in a state in which an entire film was dipped into water to allow progress of solidification of the raw material solution attached to the substrate film to complete the step. Water in the solidification vessel was replaced to wash a required number of films.

(Step 4)

In a beaker, 2.5 L of ultrapure water was put. The resulting beaker was used as a washing vessel. The film through step 3 was repeatedly washed in the washing vessel while replacing water. After washing, the resulting film was air-dried. Thus, a microporous membrane made of a polyvinylidene fluoride-based resin was obtained. The obtained microporous membrane made of the polyvinylidene fluoride-based resin was evaluated in the following viewpoints. Table 1 shows the results.

(Number of defects)

Four circular sheets having a diameter of 142 mm were cut out from the polyvinylidene fluoride-based microporous membrane. The resulting sheets were dipped into isopropyl alcohol, and then one sheet thereof was set in a stainless steel holder with a tank, having an effective filtration area of 113 cm$^2$. Smoke of an incense stick ("Mainichi-koh" (registered trademark) made by Nippon Kodo Co. Ltd.) was passed through the set sheet under a filtration pressure of 100 kPa. Then, the resulting sheet was removed from the holder. Colored dots on a surface of the removed sheet on a side of the polyvinylidene fluoride-based resin were visually detected to measure the number thereof. The measurement was performed on other three sheets under the same conditions. A total of the number of defects detected on four sheets was taken as the number of defects. Table 1 shows the results.

(Air permeability)

A time required for 200 cc of air to pass through the microporous membrane (air permeability) was measured by using a Gurley type Densometer made by Toyo Seiki Seisaku-sho, Ltd. in accordance with JIS P8117. Higher air permeability shows higher gas filtration efficiency of the sheet.

(Amount of water permeation)

A circular-shaped sheet having a diameter of 25 mm was cut out from the microporous membrane obtained. The resulting sheet was set in a filter sheet holder having an effective filtration area of 3.5 cm$^2$, and 5 mL of ultrapure water was passed through the set sheet under a filtration pressure of 50 kPa, and a time from start to end of passing of ultrapure water was measured. On this occasion, a time required for passing a total amount of ultrapure water therethrough was measured. An amount of flow (amount of water permeation) per filtration area of the sheet was determined by the following equation. Larger water permeability determined by the following equation shows a lower clogging degree of the pores, and higher liquid filtration efficiency.

$$\text{Amount of water permeation } (10^{-9} \text{ m}^3/\text{m}^2/\text{Pa}/\text{sec}) = \text{Amount of water flow } (\text{m}^3) \text{ / effective filtration area } (\text{m}^2) \text{ / filtration pressure } (\text{Pa}) \text{ / time } (\text{sec})$$

## Table 1

| | | | Examples | | | | | | | Comparative Examples | | |
|---|---|---|---|---|---|---|---|---|---|---|---|---|
| | | | 1 | 2 | 3 | 4 | 5 | 6 | 7 | 1 | 2 | 3 |
| Raw material solution | | PVDF | HSV900 | HSV900 | HSV900 | HSV900 | HSV900 | HSV900 | HSV900 | HSV900 | HSV900 | HSV900 |
| | | (Weight%) | 10.0 | 10.0 | 10.0 | 10.5 | 11.0 | 10.5 | 10.0 | 10.0 | 10.0 | 10.0 |
| | | Solvent | DMAc | DMAc | DMAc | DMAc | DMAc | DMAc | DMAc | DMAc | DMAc | DMAc |
| | | (Weight%) | 81.0 | 78.0 | 79.0 | 78.5 | 78.0 | 78.5 | 94.0 | 84.0 | 77.0 | 75.5 |
| | | Porosity forming agent | PEG(600) | PEG(600) | PEG(600) | PEG(600) | PEG(600) | PEG(400) | PEG(600) | PEG(600) | PEG(600) | PEG(600) |
| | | (Weight%) | 6.0 | 8.0 | 6.0 | 6.0 | 6.0 | 6.0 | 6.0 | 6.0 | 6.0 | 6.0 |
| | | Water | DQ | DQ | DQ | DQ | DQ | DQ | DQ | DQ | DQ | DQ |
| | | (Weight%) | 3.0 | 4.0 | 5.0 | 5.0 | 5.0 | 5.0 | 6.0 | 0.0 | 7.0 | 7.5 |
| Evaluation | | Number of defects | 4 | 2 | 0 | 0 | 0 | 0 | 6 | >50 | >50 | 20 |
| | | Air permeability (air, 200mL) (sec) | 10.4 | 11.0 | 6.8 | 8.3 | 9.9 | 8.4 | 6.0 | 20.8 | 6.7 | 9.8 |
| | | Amount of water permeation ($10^{-9}$/m$^3$/m$^2$/Pa/sec) | 146 | 93 | 179 | 150 | 117 | 127 | 197 | 46 | 184 | 151 |

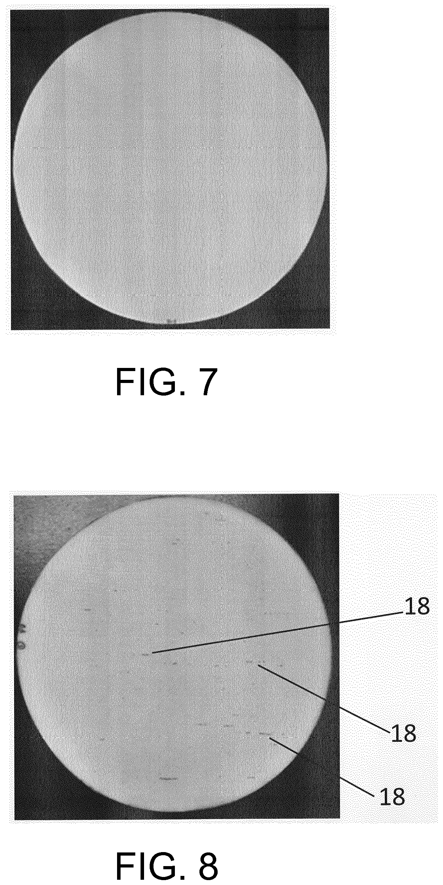

Fig. 7 shows occurrence of defects of the polyvinylidene fluoride-based microporous membrane obtained in Example 1. As shown in Fig. 7, no defects are visually detected in Example 1.

Fig. 8 shows occurrence of defects of the polyvinylidene fluoride-based microporous membrane obtained in Comparative Example 1. As shown in Fig. 8, a great number of defects 18 occur in Comparative Example 1.

As shown in Table 1, almost no defects exist in the polyvinylidene fluoride-based microporous membrane of the invention. Moreover, the polyvinylidene fluoride-based microporous membrane of the invention has a good balance between air permeability and water permeability, and exhibited sufficient permeability. Thus, if the polyvinylidene fluoride-based microporous membrane of the invention is used, fluid separation and filtration can be performed with high precision.

In contrast thereto, in Comparative Examples, an irregular structure or faults such as coarse voids occur in the polyvinylidene fluoride-based microporous membrane, which suggests low capability of fluid separation and filtration.

**Industrial Applicability**

The present invention contributes to quality improvement of a microporous membrane made of a polyvinylidene fluoride-based resin. According to the invention, opportunities for using the microporous membrane made of the polyvinylidene fluoride-based resin for various industrial products can be expanded. For example, performance of an air vent filter can be improved by using the microporous membrane made of the polyvinylidene fluoride-based resin according to the invention.

**Reference Signs List**

| | |
|---|---|
| 1 | Skin layer |
| 2 | Support layer |
| 3 | Substrate film |
| 4 | Spherical body |
| 5 | Binding material |
| 6 | Coater (Applicator) |
| 7 | Raw material solution |
| 8 | Substrate film |
| 9 | Solidification vessel |
| 10 | Film |
| 11 | Ultrapure water |
| 12 | Washing vessel |
| 13 | Film |
| 14 | Ultrapure water |
| 15 | Step 2 |
| 16 | Step 3 |
| 17 | Step 4 |
| 18 | Defect |

**Claims**

1.  A polyvinylidene fluoride-based microporous membrane, comprising:

    a substrate film; and a microporous membrane as follows, wherein the microporous membrane is an asymmetric membrane, and has a skin layer in which micropores are formed, and a support layer which supports the skin layer and in which pores larger than the micropores are formed,
    a material of the microporous membrane is a polyvinylidene fluoride-based resin,
    the skin layer has a plurality of spherical bodies, and a plurality of linear binding materials extend three-dimensionally from the respective spherical bodies, and the adjacent spherical bodies are connected with each other by the linear binding materials to form a three-dimensional network structure where the spherical bodies serve as intersections, and
    a number of defects (a number of colored coarse voids) measured by a method as follows is less than 20:
    (defect measuring method)
    four circular sheets having a diameter of 142 mm are cut out from the polyvinylidene fluoride-based microporous membrane; the resulting sheets are dipped into isopropyl alcohol, and then one sheet thereof is set in a stainless steel holder with a tank, having an effective filtration area of 113 $cm^2$; smoke of an incense stick is passed through the set sheet under a filtration pressure of 100 kPa; then, the resulting sheet is removed from the holder; colored dots on a surface of the removed sheet on a side of the polyvinylidene fluoride-based resin are visually detected to measure a number thereof; the measurement is also performed on other three sheets under same conditions; and a total of the number of defects detected in the four sheets is taken as the number of defects.

2.  The polyvinylidene fluoride-based microporous membrane according to claim 1, wherein the number of defects is 5 or less.

3.  The polyvinylidene fluoride-based microporous membrane according to claim 1, obtained by solidifying, in water, a raw material solution having a viscoelasticity as follows: wherein a graph with a shear rate (1/s) (x) as a horizontal axis and a reciprocal of viscosity (1/mPa·s) (y) as a vertical axis shows a curve having an arc with a convex upward for the raw material solution, in which a region of $x \leq 40$ can be approximated by a quadratic function, and a quadratic coefficient of the quadratic function is less than $10^{-8}$.

FIG. 1

FIG. 2

2μm

## FIG. 3

1μm

4

5

## FIG. 4

Y (1/(mPa · s)

$y = -4.111E{-}08x^2 + 3.666E{-}06x + 1.220E{-}04$

X (1/s)

FIG. 5

FIG. 6

FIG. 7

FIG. 8

# EP 3 603 781 A1

## INTERNATIONAL SEARCH REPORT

International application No.

PCT/JP2018/012974

### A. CLASSIFICATION OF SUBJECT MATTER

Int. Cl. B01D71/34(2006.01)i, B01D69/00(2006.01)i, B01D69/10(2006.01)i, B01D69/12(2006.01)i, C08J9/28(2006.01)i, B01D65/10(2006.01)n

According to International Patent Classification (IPC) or to both national classification and IPC

### B. FIELDS SEARCHED

Minimum documentation searched (classification system followed by classification symbols)

Int. Cl. B01D71/34, B01D69/00, B01D69/10, B01D69/12, C08J9/28, B01D65/10

Documentation searched other than minimum documentation to the extent that such documents are included in the fields searched

Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-221218 A (TORAY INDUSTRIES, INC.) 07 October 2010, claims 1-6, 19-27, paragraphs [0044]-[0046], [0048], example 1, comparative example 1 & JP 5127107 B2 & JP 5310658 B2 & US 2003/150808 A1, claims 1-6, 19-27, paragraphs [0063]-[0065], [0067], example 1, comparative example 1 & US 2008/067127 A1 & US 9649602 B2 & WO 2002/064240 A1 & EP 1371409 A1 & EP 1371409 B1 | 1-3 |
| Y | | 1-3 |
| Y | WO 2014/054658 A1 (JNC CORP.) 10 April 2014, claims 1, 5-6, example 1 & US 2015/328593 A1, claims 1, 5-6, example 1 & EP 2905068 A1 & JP 5729521 B2 & CN 104684633 A | 1-3 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.05.2018 | 22.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/012974

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-205067 A (TORAY INDUSTRIES, INC.) 10 August 2006, entire text (Family: none) | 1-3 |
| A | JP 2015-160185 A (JNC CORP.) 07 September 2015, entire text (Family: none) | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014054658 A
- WO 2002072248 A
- JP 2004016930 A